# EUROPEAN PATENT SPECIFICATION

(11) **EP 3 736 480 B1**
(45) Date of publication and mention of the grant of the patent: **09.11.2022**
(21) Application number: 20170707.2
(22) Date of filing: 21.04.2020
(51) Int. Cl.: F16L 37/12, F16L 37/14, F16L 55/11

(54) **COUPLING ASSEMBLED WITH HAIRPINS**
MIT HAARNADELN ZUSAMMENGESETZTER VERBINDER
RACCORD ASSEMBLÉ AVEC DES ÉPINGLES À CHEVEUX

(30) Priority: 02.05.2019 DK PA201900528
(43) Date of publication of application: 11.11.2020
(73) Proprietor: Danfoss A/S, 6430 Nordborg (DK)
(72) Inventor: Ginnerup, Lars, 6430 Nordborg (DK)
(74) Representative: Keil & Schaafhausen Patentanwälte PartGmbB

(56) References cited:
- CN-A- 103 791 189
- DE-A1- 3 126 405
- DE-A1-102006 007 460
- IT-A1- BO20 090 536

## Description

### BACKGROUND

The present invention relates to connection of pipes in flow systems, such as metal, plastic or composite pipes etc. The flow systems could be heating and/or cooling systems, manifolds etc. or any other system where a flow tight connection of pipes is required. In the present context 'pipes' is to be understood broadly as flow conducting parts in general to be connected. Traditionally pipes in such systems are assembled by threaded fittings, which have the disadvantage that the connections need to be sealed manually with the risk of leakage. At the same time when fittings are used, the distance between the connections will be longer in the assembling point, which can give problems with insulation of the system. A further disadvantage with threaded connection is that the rotation position easily gets different from part to part, and when adjusting by turning backwards, there is a risk of leakage.

Other problems include to ensure a quick and at the same time stable and flow tight assembly of the pipes, where they further are easily replaceable e.g. during maintenance of the system.

IT B020090536 A1 shows a coupling system of two pipes comprising a connection insert, sealing means in grooves of the connecting insert, and a locking groove in the outer circumferential surface of the connecting insert. Furthermore, this document shows a locking member comprising an extension, said extension being adapted to extend through one or more openings in the pipes to engage with the locking groove to secure the positioning of the connecting insert in the receptacle portion.

DE 31 26 405 A1 shows a plug-in coupling having basically two parts, namely a plug-in nipple and a plug-in socket. The connection of the two parts take place by means of a U-shaped plug-in fork. The plug-in nipple has an angular groove between two collars for the engagement of the plug-in fork. The plug-in socket comprises openings into which the plug-in fork can be inserted to enter the groove.

Sealing means in form of an O-ring are provided in a position in which the plug-in nipple and the plug-in socket has constant diameters.

DE 10 2006 007 460 A1 shows a mounting structure of a connector used for a fluid piping connection. A pipe having a seal holding portion comprising two seals in form of O-rings is inserted into a connection hole. The seal holding portion comprises an angular stop portion. When the seal holding portion is inserted into the connection and a locking member is mounted, two extensions of the locking member are positioned between the angular stop portion and a counter part of the housing.

CN 103791189 A shows another coupling assembly for coupling a pipe with other pipes. The pipe comprises circumferential grooves at its ends. The pipe is inserted into a connecting socket and a kind of torque is inserted in slots of the connecting socket to enter the grooves in the pipe.

### SUMMARY OF THE INVENTION

The solution according to the present invention is as given in the independent claim. This includes introducing a coupling system of two pipes comprising:
a connecting insert configured to couple to a receptacle portion of one of the pipes and having a locking groove formed in the outer circumferential surface, a locking member comprising an extension, said extension adapted to extend through one or more openings in said pipes to engage with the locking groove to secure the positioning of the connecting insert in the receptacle portion. The receptacle portion is formed at the end of the pipe to be connected and has a larger inner diameter than a midsection of the pipe, and the outer contour of an end of the connecting insert is shaped such that it fits (substantially tightly) into the receptacle portion. The receptacle portion has a tapered shape, and the end of the connecting insert accordingly has a sloping end section with a decreasing diameter from an midpart towards its end. The insert element comprises two locking grooves positioned at each their half of the connecting insert and each neighbouring a sealing groove at its outer side seen towards the nearest end-face of the insert element.

In an embodiment the locking groove is circumventing the outer circumferential surface. This ensures independence of the orientation of the connecting insert in the receptacle portion.

In an embodiment the openings are formed in the receptacle portion wall from the outer pipe surface into the inner of the pipe.

In an embodiment the connecting insert comprise grooves circumventing the outer circumferential surface and positioned at an outer end of the connecting insert relative to a neighbouring locking groove and being adapted for a sealing element. This ensures a tight connection to the inner wall of the pipes, which, when the openings are positioned between the sealing element and the outer opening of the receptacle portion, then the openings are sealed from the fluids within the pipes. Further, the elasticity of the sealing element increases the tightness of the connection and thus the stability.

The pipes may be formed with outer reinforcements, at least in the areas of the receptacle portions, and where openings at least partly are formed in the outer reinforcements. This increases the strength and rigidness of the pipes.

The locking member may comprise two extensions adapted to engage with the two locking grooves of the inserting element, and an opening of each of the two connected pipes. Thereby the locking member reaches over the connected end phases of the pipes assisting in keeping them closely locked together, preventing rotation etc.

In an embodiment, when two pipes are connected, then the locking member is fully enclosed inside the receptacle portions of the two connected pipes, where this is to be understood as the section(s) of the locking member inserted into the openings (such as parts of the extension(s)) is fully enclosed. The openings and locking members thus are positioned in the sealed area between sealing elements, or at the outside of a sealing element, thus preventing leakage and ensuring the locking members need not be made of a material resistant to the fluids,

The receptacle portions may comprise two or more openings adapted to receive extensions of two or more locking members. This assists e.g. rigidness of the system in any movement of the pipes relative to each other.

In an embodiment the invention includes an insert element to couple together two pipes, said insert element formed by two sections each comprising a locking groove neighbouring a sealing groove at its outer side seen towards the nearest end-face of the insert element, and where the connecting insert is adapted to fit with each half into a receptacle portion (300) in one of the two pipes, and where a locking member comprises two extensions is adapted to reach through an opening of one of the two connected pipes to engage with the two locking grooves (210) of the connecting insert (200).

This disclosure includes a method to connect two pipes, each pipe comprising a receptacle portion at an end-section including an opening, said method including a step of connecting the two pipes with an half section of connecting insert in each of the two connected receptacle portions, where said insert element is formed by two sections each comprising a locking groove neighbouring a sealing groove at its outer side seen towards the nearest end-face of the insert element, and a step of locking the coupling by inserting a locking member comprises two extensions into the openings of one of the two connected pipes to engage with the two locking grooves of the inserting element.

In the present invention the use of the locking member and the sealing element (e.g. O-rings) keeps the pipes close together in the assembly in a sealed manner, such that the distance will be kept all through the system. The locking member(s) further prevents any rotation of the pipes relative to each other.

### FIGURES

- Fig. 1: Side view showing two pipes connected according to an embodiment of the present invention.
- Fig. 2: Side view showing a pipe with receptacle portions and openings at each end part, and a front view of a pipe with an outer reinforcement.
- Fig. 3: En embodiment of an insert element according to an embodiment of the present invention.
- Fig. 4: Illustration of two pipes with outer reinforcements and an insert element.

### DETAILED DESCRIPTION OF THE INVENTION

It should be understood, that the detailed description and specific examples, while indicating embodiments of the invention, are given by way of illustration only, since various changes and modifications within the scope of the invention as defined by the claims will become apparent to those skilled in the art from the detailed description.

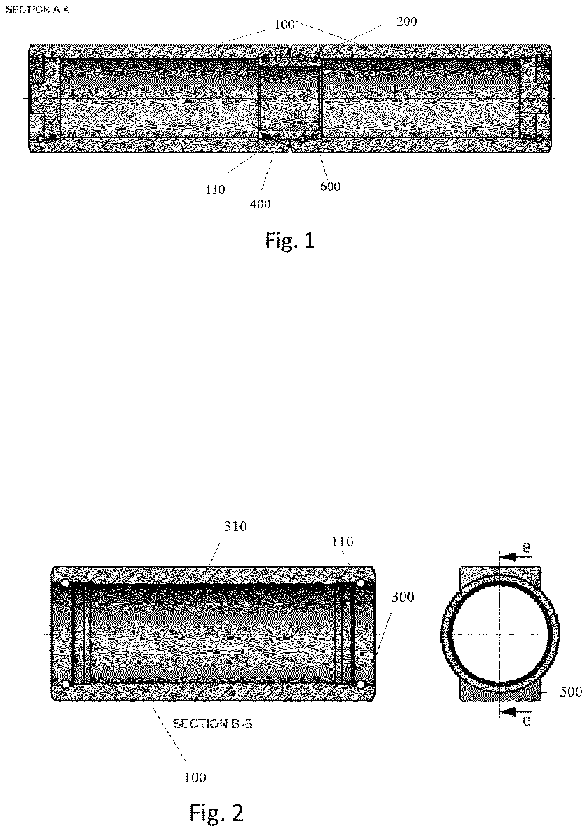

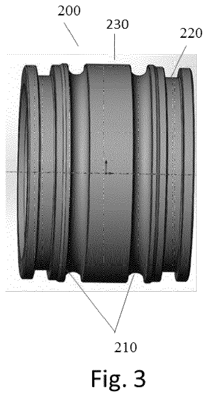

Fig. 1 illustrate a coupling system of two pipes (100), where each pipe at an end-section is formed with a receptacle portion (300), which is more clearly visible in fig. 2. A connecting insert (200) is positioned with two half sections, each half section positioned in a receptacle portion (300) of the two pipes (100). Fig. 3 shows a side view of an embodiment of the connecting insert (200) comprising locking grooves (210) formed in the outer circumferential surface (230), such that one locking groove (210) is formed in each of the half sections. Between an end face and a locking groove (210) is formed a sealing groove (220), such that each half section comprises a locking groove (210) at one side neighbouring the locking groove (210) of the other half section, and at the other side a sealing groove (220). The two half sections may mirror each other or may be differently shaped to fit in possible differently shaped receptacle portions (300) of the two pipes (100).

The sealing grooves (220) may be circumventing the outer circumferential surface (230) and be adapted for a sealing element (600).

The receptacle portions (300) are formed at the end sections of the pipes (100) to be connected and has a larger inner diameter than the midsection (310) of the pipe (100). The outer contour of an end of the connecting insert (200) is shaped such that it fits into the receptacle portion (300).

That the inner diameters of the midsections (310) of the pipes (100) smaller than that of the receptacle portions (300) ensures the positioning of the connecting insert (200) defining a stop to the length of its insertion.

The outer contour, or shape, of the connecting insert (200) is such that the inserted section will fit substantially tight into the receptacle portion (300). When sealing elements (600) are positioned in the sealing grooves (220) they squeeze against the receptacle portion (300) inner wall forming a tight sealing to the side of the outer surface of the connecting insert (200) comprising the locking grooves (210).

The receptacle portion (300) is formed with a tapered shape, and the end of the connecting insert (100) accordingly has a sloping end-section with a decreasing diameter from an midpart towards its end, as seen in the embodiment of the figures. In another embodiment which is not within the scope of the claims, the inner wall of the receptacle portions (300) are stepped from the opening to the pipe midsection (310) and the connecting insert (100) shaped accordingly.

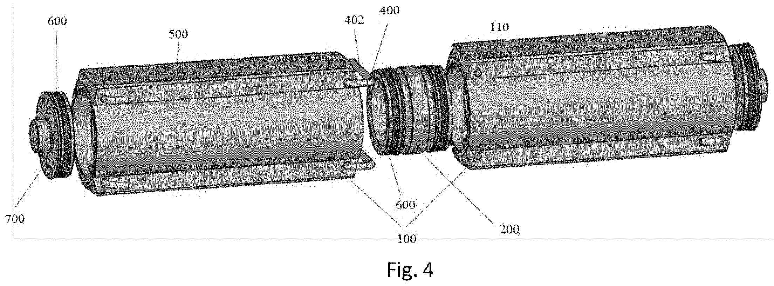

As seen in e.g. figs. 1-3 openings (110) formed in the receptacle portion (300) into the inner of the pipe (100) allowing an extension (402) of a locking member (400) (see fig. 4) to extend through one or more openings (110) in said pipes (100) to engage with the locking groove (210) to secure the positioning of the connecting insert (200) in the receptacle portion (300). The locking member (400) may be U-shaped and may comprise two extensions (402) possible extending in parallel.

Fig. 1 illustrate two pipes (100) connected with the connecting insert (200) positioned with a section in each of the two connected receptacle portions (300). The sealing elements (600) is positioned at an inner side of the receptacle portions (300) relative to the position of the locking grooves (210) and openings (110) effectively sealing them from the fluid within the pipes (100).

The extensions (402) engaging with the locking grooves (210) ensure the connecting insert (200) is locked in position, and thereby ensures a stable fixation of the two to each other through their fixation to the connecting insert (200).

In the illustrated embodiment of fig. 4 including a U-shaped locking member (400), the two extensions (402) each will engage each an opening (110) of a separate of the two connected pipes (100) thus reaching across their connection. In this embodiment the locking member (400) is adapted to engage with the two locking grooves (210) of the connecting insert (200).

Alternative embodiment shapes of the locking member (400) would also apply, such as only including a single extension (402) and thus using two rather than a single locking member (400).

In one embodiment, such as the one illustrated in the drawings, the receptacle portions (300) comprise two or more openings (110) adapted to receive extensions (402) of two or more locking members (400). This is illustrated as upper and lower openings (110).

As illustrated in fig. 1, in an embodiment when two pipes (100) are connected, then the part of the extension(s) (402) inserted into the opening(s) (110) of the locking member (400) is/are fully enclosed inside the receptacle portions (300) of the two connected pipes (100).

In an embodiment the locking grooves (210) are circumventing the outer circumferential surface (230). This both has the advantage that connecting insert (200) does not have to be oriented during insertion, but also that the same locking groove (210) could be engaged with a plural of extensions (402), such as from an upper and lower positioned locking member (400) as illustrated.

In an embodiment the pipes (100) are formed with outer reinforcements (500), at least in the areas of the receptacle portions (300), and where the openings (110) at least partly formed in the outer reinforcements (500).

As a further feature, a plug element (700) may be introduced at non-connected ends of the pipes (100) to be sealed. The plug element (700) in an embodiment comprises a sealing element (600) in the same manner as the connecting insert (200), but only has a length, such that when inserted into the receptacle portion (300), then its outer surface reach at the inner side relative to the opening (110) such that an inserted extension (402) engage with this outer surface fixing the plug element (700) in position.

The method to connect two pipes (100) is to provide each pipe with a receptacle portion (300) at an end-section including an opening (110), where the pipes (100) in an embodiment is formed as such from their manufacture.

The method includes a step of connecting the two pipes (100) with an half section of connecting insert (220) in each of the two connected receptacle portions (300), where said connecting insert (200) is formed according to the previous embodiments with two sections each comprising a locking groove (210) neighbouring a sealing groove (220) at its outer side seen towards the nearest end-face of the connecting insert (200),

The method further includes a step of locking the coupling by inserting a locking member (400) comprises two extensions (402) into the openings (110) of one of the two connected pipes (100) to engage with the two locking grooves (210) of the connecting insert (200).

## Claims

1. A coupling system comprising: two pipes (100), a connecting insert (200), and a locking member (400), wherein the pipes (100) each comprise a receptacle portion (300), the connecting insert (200) is configured to couple to the receptacle portions (300) of the pipes (100) and has a locking groove (210) formed in its outer circumferential surface (230), the locking member (400) comprises an extension (402), said extension being adapted to extend through one or more openings (110) in said pipes (100) to engage with the locking groove (210) to secure the positioning of the connecting insert (200) in the receptacle portion (300), wherein the receptacle portion (300) is formed at the end of the pipe (100) to be connected and has a larger inner diameter than a midsection (310) of the pipe (100), and the outer contour of each end of the connecting insert (200) is shaped such that it fits into the respective receptacle portion (300), wherein the receptacle portion (300) has a tapered shape, and the end of the connecting insert (200) (100) accordingly has a sloping end section with a decreasing diameter from an midpart towards its end, wherein the connecting insert (200) comprises two locking grooves (210) each positioned at a half of the connecting insert (200) and each neighbouring a sealing groove (220) at its outer side seen towards the nearest end-face of the connecting insert (200), wherein sealing elements (600) are positioned in the sealing grooves, **characterized in that** the sealing grooves (220) with the sealing elements (600) positioned therein are positioned in the sloping end sections of the connecting insert (200).

2. A coupling system according to claim 1, wherein each locking groove (210) is circumventing the outer circumferential surface (230)

3. A coupling system according to claim 1 or 2, wherein the openings (110) are formed in the receptacle portion (300) wall from the outer pipe (100) surface into the inner of the pipe (100)

4. A coupling system according to any of the preceding claims, where the sealing grooves (220) are circumventing the outer circumferential surface (230).

5. A coupling system according to any of the preceding claims, where the pipes (100) are formed with outer reinforcements (500), at least in the areas of the receptacle portions (300), and where the openings (110) at least partly are is formed in the outer reinforcements (500).

6. A coupling system according to any of the preceding claims, where the locking member (400) comprises two extensions (402) adapted to engage with the two locking grooves (210) of the connecting insert (200), and an opening (110) of each of the two connected pipes (100).

7. A coupling system according to any of the preceding claims, where, when two pipes (100) are connected, then the inserted extension(s) (402) of the locking member (400) is fully enclosed inside the receptacle portions (300) of the two connected pipes (100).

8. A coupling system according to any of the preceding claims, where the receptacle portions (300) comprise two or more openings (110) adapted to receive extensions (402) of two or more locking members (400).

## Patentansprüche

1. Kupplungssystem, das aufweist:
zwei Rohre (100), einen Verbindungseinsatz (200), und ein Verriegelungselement (400), wobei die Rohre (100) jeweils einen Aufnahmeabschnitt (300) aufweisen, wobei der Verbindungseinsatz (200) so konfiguriert ist, dass er mit den Aufnahmeabschnitten (300) der Rohre (100) verbunden werden kann, und eine Verriegelungsnut (210) aufweist, die in seiner Außenumfangsfläche (230) ausgebildet ist, wobei das Verriegelungselement (400) eine Verlängerung (402) aufweist, wobei die Verlängerung so angepasst ist, dass sie sich durch eine oder mehrere Öffnungen (110) in den Rohren (100) erstreckt, um in die Verriegelungsnut (210) einzugreifen, um die Positionierung des Verbindungseinsatzes (200) in den Aufnahmeabschnitt (300) zu sichern, wobei der Aufnahmeabschnitt (300) an dem Ende des zu verbindenden Rohres (100) ausgebildet ist und einen größeren Innendurchmesser als ein Mittelabschnitt (310) des Rohres (100) aufweist, und die Außenkontur jedes Endes des Verbindungseinsatzes (200) so geformt ist, dass sie in den jeweiligen Aufnahmeabschnitt (300) passt, wobei der Aufnahmeabschnitt (300) eine konische Form aufweist, und das Ende des Verbindungseinsatzes (200) dementsprechend einen schrägen Endabschnitt mit einem abnehmenden Durchmesser von einem Mittelteil zu seinem Ende hin aufweist, wobei der Verbindungseinsatz (200) zwei Verriegelungsnuten (210) aufweist, die jeweils an einer Hälfte des Verbindungseinsatzes (200) positioniert sind und jeweils an ihrer Außenseite, gesehen in Richtung der nächstgelegenen Endfläche des Verbindungseinsatzes (200), an eine Dichtungsnut (220) angrenzen, wobei in den Dichtungsnuten Dichtelemente (600) angeordnet sind, **dadurch gekennzeichnet, dass** die Dichtungsnuten (220) mit den darin angeordneten Dichtelementen (600) in den schrägen Endabschnitten des Verbindungseinsatzes (200) angeordnet sind.

2. Kupplungssystem nach Anspruch 1, wobei jede Verriegelungsnut (210) um die Außenumfangsfläche (230) umläuft.

3. Kupplungssystem nach Anspruch 1 oder 2, wobei die Öffnungen (110) in der Wand des Aufnahmeteils (300) von der Außenfläche des Rohres (100) in das Innere des Rohres (100) hinein ausgebildet sind.

4. Kupplungssystem nach einem der vorhergehenden Ansprüche, wobei die Dichtungsnuten (220) die äußere Umfangsfläche (230) umschließen.

5. Kupplungssystem nach einem der vorhergehenden Ansprüche, wobei die Rohre (100) zumindest in den Bereichen der Aufnahmeteile (300) mit äußeren Verstärkungen (500) ausgebildet sind und wobei die Öffnungen (110) zumindest teilweise in den äußeren Verstärkungen (500) ausgebildet sind.

6. Kupplungssystem nach einem der vorhergehenden Ansprüche, wobei das Verriegelungselement (400) zwei Verlängerungen (402) aufweist, die geeignet sind, in die beiden Verriegelungsnuten (210) des Verbindungseinsatzes (200) und in je eine Öffnung (110) der beiden verbundenen Rohre (100) einzugreifen.

7. Kupplungssystem nach einem der vorhergehenden Ansprüche, wobei, wenn zwei Rohre (100) verbunden sind, die eingeführte(n) Verlängerung(en) (402) des Verriegelungselements (400) vollständig in den Aufnahmeabschnitten (300) der beiden verbundenen Rohre (100) eingeschlossen ist (sind).

8. Kupplungssystem nach einem der vorhergehenden Ansprüche, wobei die Aufnahmeteile (300) zwei oder mehr Öffnungen (110) aufweisen, die geeignet sind, Verlängerungen (402) von zwei oder mehr Verriegelungselementen (400) aufzunehmen.

## Revendications

1. Raccord assemblé comprenant : deux tubes (100), un insert de connexion (200) et un membre de verrouillage (400), dans lequel les tubes (100) comprennent chacun une partie de réceptacle (300),
l'insert de connexion (200) est configuré pour s'accoupler aux parties de réceptacle (300) des tubes (100) et présente une rainure de verrouillage (210) formée dans sa surface circonférentielle extérieure (230),
le membre de verrouillage (400) comprend une extension (402), ladite extension étant adaptée pour s'étendre à travers une ou plusieurs ouverture(s) (110) dans lesdits tubes (100) pour s'engager avec la rainure de verrouillage (210) pour sécuriser le positionnement de l'insert de connexion (200) dans la partie de réceptacle (300), dans lequel la partie de réceptacle (300) est formée à l'extrémité du tube (100) destiné à être connecté et présente un diamètre intérieur plus grand qu'une section médiane (310) du tube (100), et le contour extérieur de chaque extrémité de l'insert de connexion (200) est formé de telle façon qu'il s'insère dans la partie de réceptacle (300) respective, dans lequel la partie de réceptacle (300) présente une forme conique, et l'extrémité de l'insert de connexion (200) présente par conséquent une section d'extrémité en déclivité avec un diamètre décroissant depuis une partie médiane vers son extrémité, dans lequel l'insert de connexion (200) comprend deux rainures de verrouillage (210) chacune positionnée à une moitié de l'insert de connexion (200) et chacune avoisinant une rainure d'étanchéité (220) sur son côté extérieur vu en direction de la face d'extrémité de l'insert de connexion (200) la plus proche, dans lequel des éléments d'étanchéité (600) sont positionnés dans les rainures d'étanchéité, **caractérisé en ce que** les rainures d'étanchéité (220) avec les éléments d'étanchéité (600) positionnés à l'intérieur sont positionnées dans les sections d'extrémité en déclivité de l'insert de connexion (200).

2. Raccord assemblé selon la revendication 1, dans lequel chaque rainure de verrouillage (210) contourne la surface circonférentielle extérieure (230).

3. Raccord assemblé selon la revendication 1 ou 2, dans lequel les ouvertures (110) sont formées dans la paroi de partie de réceptacle (300), de la surface de tube extérieur (100) jusque dans l'intérieur du tube (100).

4. Raccord assemblé selon l'une quelconque des revendications précédentes, dans lequel les rainures d'étanchéité (220) contournent la surface circonférentielle extérieure (230).

5. Raccord assemblé selon l'une quelconque des revendications précédentes, dans lequel les tubes (100) sont formés avec des renforts extérieurs (500), au moins dans les endroits des parties de réceptacle (300), et où les ouvertures (110) sont au moins partiellement formées dans les renforts extérieurs (500).

6. Raccord assemblé selon l'une quelconque des revendications précédentes, dans lequel le membre de verrouillage (400) comprend deux extensions (402) adaptées pour s'engager avec les deux rainures de verrouillage (210) de l'insert de connexion (200), et une ouverture (110) de chacun des deux tubes connectés (100) .

7. Raccord assemblé selon l'une quelconque des revendications précédentes, dans lequel lorsque deux tubes (100) sont connectés, alors la/les extension(s) insérée(s) (402) du membre de verrouillage (400) est/sont complètement enfermée(s) à l'intérieur des parties de réceptacle (300) des deux tubes (100) connectés.

8. Raccord assemblé selon l'une quelconque des revendications précédentes, dans lequel les parties de réceptacle (300) comprennent deux ouvertures ou plus (110) adaptée(s) pour recevoir des extensions (402) de deux membres de verrouillage ou plus (400).
